# EUROPEAN PATENT APPLICATION

(11) **EP 0 612 722 A2**
(43) Date of publication of application: **31.08.1994**
(21) Application number: 94201347.5
(22) Date of filing: 30.07.1991
(51) Int. Cl.: C07C 263/10, C07C 265/12, B01D 69/12, B01D 71/56, B01D 71/54

(54) **Isocyanate-substituted isophthaloyl chlorides**

(30) Priority: 31.07.1990 US 560512
(62) Divisional of application: 91306964.7
(71) Applicant: E.I. DU PONT DE NEMOURS AND COMPANY, Wilmington Delaware 19898 (US)
(72) Inventor: Arthur, Samuel David, Wilmington, Delaware 19802 (US)
(74) Representative: Jones, Alan John

(57) **Abstract**

Isocyanate-substituted isophthaloyl chlorides may be made by forming a mixture of amino-substituted isophthalic acid or a salt thereof, with phosgene and halogenated solvent in the presence of a catalyst, heating said mixture in a pressure vessel under autogenous pressure, treating the mixture to remove the solvent, and distilling the mixture to yield the isocyanate-substituted isophthaloyl chloride. The preferred catalyst is imidazole and the preferred isocyanate-substituted isophthaloyl chloride is 5-isocyanatoisophthaloyl chloride.

## Description

This invention relates to the preparation of isocyanatesubstituted isophthaloyl chlorides.

According to this invention isophthaloyl chlorides are prepared by reacting an amino-substituted isophthalic acid or a salt of an amino-substituted isophthalic acid with phosgene and halogenated aliphatic solvent in the presence of a catalyst under elevated pressure and temperature, e.g. in a pressure vessel under autogenous pressure.

The preferred amino-substituted isophthalic acid is 5-amino isophthalic acid and the preferred halogenated solvent is chlorinated benzene.

Examples of isocyanate substituted isophthaloyl chlorides which may be made by the process of the invention are 2 -isocyanatoisophthaloyl chloride, 4-isocyanatoisophthaloyl chloride and 5-isocyanatoisophthaloyl chloride.

5-isocyanatoisophthaloyl chloride (ICIC) also may be produced by using alternatives to the preferred reactants mentioned above. For example, salts of 5-aminoisophthalic acid such as disodium 5-aminoisophthalate or 5-aminoisophthalic acid hydrochloride may be substituted for 5-aminoisophthalic acid. Similarly, the catalyst imidazole may be replaced by other heteroatom-containing compounds capable of complexing phosgene. Examples of such catalysts include, but are not limited to pyridine, N,N-dimethylformamide (DMF), N,N-dimethylacetamide (DMAc) and the like. Likewise, solvents such as dioxane or methylene chloride may be employed, so long as the solvent is reasonably unreactive with the reactants and products.

The isocyanate-substituted isophthaloyl chlorides made by the process of this invention may be used in solution in a solvent to treat polyfunctional amino impregnated substrates, which treated substrates may be used as reverse osmosis membranes. The specification of copending EP 91306964.7 describes a method of making reverse osmosis membranes wherein a polyfunctional amine treated substrate is treated with an isocyanate-substituted acyl halide.

### EXAMPLE

5-isocyanatoisophthaloyl chloride (ICIC) was prepared by heating a mixture of 10 grams of 5-aminoisophthalic acid, a catalyst of 0.5 grams of imidazole, 60 grams of phosgene, and 50 ml of chlorobenzene solvent in a pressure vessel at 160°C for 18 hours at under autogenous pressure. Removal of the solvent, followed by distillation of the product at 123-128°C and 0.2 mm Hg yielded 8.8 grams of ICIC.

## Claims

1. A method of manufacture of isocyanate-substituted isophthaloyl chloride comprising forming a mixture of amino-substituted isophthalic acid or a salt thereof, with phosgene and halogenated solvent in the presence of a catalyst, heating said mixture under elevated pressure, treating said mixture to remove said solvent, and distilling said mixture to yield said isocyanate-substituted isophthaloyl chloride.

2. The method of claim 1 wherein said isocyanate substituted isophthaloyl chloride is selected from 2-isocyanatoisophthaloyl chloride, 4-isocyanatoisophthaloyl chloride and 5-isocyanatoisophthaloyl chloride.

3. The method of claim 1 or claim 2 wherein said amino-substituted isophthalic acid is 5-amino-isophthalic acid.

4. The method of any one of claims 1 to 3 wherein said catalyst is imidazole.

5. The method of any one of claims 1 to 4 wherein said halogenated solvent is chlorinated benzene.

6. The method of any one of claims 1 to 5 wherein said isocyanate-substituted isophthaloyl chloride is 5-isocyanatoisophthaloyl chloride.
